# EUROPÄISCHE PATENTANMELDUNG

(11) **EP 2 698 245 A1**
(43) Veröffentlichungstag der Anmeldung: **19.02.2014**
(21) Anmeldenummer: 13004060.3
(22) Anmeldetag: 15.08.2013
(51) Int. Cl.: B32B 5/26

(54) **Verbundmaterial und Verfahren zu seiner Herstellung**

(30) Priorität: 15.08.2012 DE 102012016107
(71) Anmelder: Otto Bock HealthCare GmbH, 37115 Duderstadt (DE)
(72) Erfinder: Karlsson, Thomas, 19276 Sollentuna (SE)
(74) Vertreter: Friedrich, Andreas

(57) **Zusammenfassung**

Die Erfindung betrifft ein Verbundmaterial (1) mit
einer ersten Schicht (2) aus einem ersten Material (8), die
- eine Oberseite und eine der Oberseite gegenüberliegende Unterseite aufweist und

einer an der Oberseite der ersten Schicht (2) angeordneten zweiten Schicht (4) aus einem textilen zweiten Material (14),
wobei das erste Material (8) entlang einer ersten Richtung eine höhere Elastizität als entlang einer von der ersten Richtung verschiedenen zweiten Richtung aufweist,
wobei die erste Richtung und die zweite Richtung parallel zu der Oberseite des ersten Schicht (2) verlaufen und
wobei die erste Schicht (2) und die zweite Schicht (4) derart flächig miteinander verbunden sind, dass das Verbundmaterial (1) entlang der ersten Richtung eine größere Elastizität als entlang der zweiten Richtung aufweist.

## Beschreibung

Die Erfindung betrifft ein Verbundmaterial mit einer ersten Schicht aus einem ersten Material, die eine Oberseite und eine der Oberseite gegenüberliegende Unterseite aufweist und eine an der Oberseite der ersten Schicht angeordneten zweiten Schicht. Die Erfindung betrifft zudem ein Verfahren zur Herstellung eines derartigen Verbundmaterials.

Verbundmaterialien sind heute aus vielen Gebieten der Technik bekannt und nicht mehr wegzudenken. Sie sind für unterschiedlichste Anwendungen geeignet und haben in diesen Anwendungen traditionell verwendete Materialien oftmals vollständig verdrängt.

Der mit der vorliegenden Erfindung erreichte Verbundwirkstoff lässt sich beispielsweise auch auf dem Gebiet der Orthopädietechnik insbesondere für verschiedene Orthesen einsetzen, ist jedoch keinesfalls nur auf diesen Anwendungsbereich beschränkt. Orthesen werden verwendet um beispielsweise durch eine Operation oder Verletzung geschwächte oder bereits beschädigte Gelenke oder Körperteile eines Patienten zu stützen. Dabei werden die Orthesen nicht für jeden Patienten maßgefertigt, sondern in wenigen unterschiedlichen Größen angeboten. Damit sich eine Orthese mit einer festen Größe an die körperlichen Gegebenheiten unterschiedlicher Patienten in möglichst optimaler Weise anpassen lässt, werden Gurte und Bänder, mit denen die Orthese am Körper des Patienten befestigt wird, stufenlos verstellbar ausgebildet. Dies ist beispielsweise durch die Verwendung von Klettverschlusselementen erreichbar. Um einen möglichst weiten Verstellbereich eines mit Klettverschlusselementen ausgestatteten Gurtes oder Bandes zu erreichen, werden auch die Klettverschlusselemente selbst relativ großflächig ausgebildet.

Durch die Bänder und Gurte einer Orthese sollen auf den Körper des Patienten bestimmte Kräfte, insbesondere Druck- und Zugkräfte, aufgebracht werden. Dazu müssen die Gurte und Bänder bestimmte elastische Eigenschaften aufweisen. So ist es für viele Orthesen, beispielsweise Schulterorthesen, wünschenswert, wenn die Gurte und Bänder beispielsweise in ihrer Längsrichtung elastisch verformbar sind, so dass sie an die jeweiligen körperlichen Gegebenheiten des Patienten und die gewünschte Stärke der aufzubringenden Kraft anpassbar sind, indem sie entlang ihrer Längsrichtung in die Länge gezogen und anschließend mit beispielsweise an ihrem Ende angeordneten Klettverschlusselementen befestigt werden. Dabei kann es sehr wichtig sein, dass die aufgebrachten Kräfte nur durch eine elastische Verformung des Bandes in Längsrichtung auf den Körper des Patienten aufgebracht werden. Eine elastische Verformung des Bandes in einer Richtung senkrecht zur Längsausdehnung des Bandes oder Gurtes sollte dabei möglichst vermieden werden. Durch die relativ großflächig auszubildenden Klettverschlusselemente nehmen diese gegebenenfalls einen relativ großen Teil der Gesamtlänge des Gurtes oder Bandes ein, so dass auch in dem Bereich, in dem an dem Gurt oder Band ein Klettverschlusselement vorgesehen ist, Kräfte auf den Körper des Patienten aufzubringen sind, so dass auch in diesem Bereich eine elastische Verformung wünschenswert ist.

Nachteilig ist dabei, dass heute verwendete Velours-Schlaufenmaterialien, die herkömmlicherweise als Klettverschlusselemente verwendet werden können, entweder in beiden innerhalb der Fläche verlaufenden Richtungen elastisch ausgebildet sind und beispielsweise als gestricktes Material vorliegen können oder gänzlich unelastisch sind, so dass eine elastische Verformung in keiner der beiden Richtungen stattfinden kann. Insbesondere Klettverschlusselemente, die auf sowohl einer Oberseite als auch einer der Oberseite gegenüberliegenden Unterseite ein Klettverschlusselement, beispielsweise ein Schlaufenmaterial, aufweisen, sind oftmals unelastisch ausgebildet. Genau diese Klettelemente werden jedoch für insbesondere mit vielen Gurten am Körper des Patienten festzulegende Orthesen, beispielsweise Schulterorthesen, verwendet, da für einen perfekten Sitz der Orthese oftmals mehrere Bänder oder Gurte übereinander angeordnet werden müssen, so dass insbesondere die in der Mitte eines derartigen Schichtaufbaus angeordneten Bandelemente auf beiden Seiten Klettverschlusselemente aufweisen müssen.

Aus dem Stand der Technik sind jedoch Schlaufenmaterialien, die als Klettverschlusselemente verwendet werden können, bekannt, die mit einer speziellen Webtechnik hergestellt sind, die entlang einer Richtung, die beispielsweise die Längserstreckung des Materials sein kann, elastisch und in einer senkrecht dazu verlaufenden Richtung unelastisch ausgebildet sind. Nachteilig ist jedoch, dass bei derart speziell hergestellten Materialien aufgrund ihrer speziellen Herstellungsweise ein Zuschneiden auf unterschiedliche Breiten, wobei die Breite der Richtung entspricht, in der das Material unelastisch ist, nicht möglich ist, Vielmehr müssen, sofern unterschiedlich breite Elemente benötigt werden, diese unterschiedlich breiten Elemente getrennt voneinander hergestellt und bevorratet werden. Dies hat einen erhöhten Herstellungs- und Lagererhaltungsaufwand zur Folge, und macht die Produktion und insbesondere das Umstellen auf unterschiedliche Breiten unflexibel bzw. sogar unmöglich.

Der Erfindung liegt folglich die Aufgabe zugrunde, ein Verbundmaterial vorzuschlagen, mit dem die aus dem Stand der Technik bekannten Nachteile behoben oder zumindest vermindert werden.

Die Erfindung löst die gestellte Aufgabe durch ein Verbundmaterial mit einer ersten Schicht aus einem ersten Material, die eine Oberseite und eine der Oberseite gegenüberliegende Unterseite aufweist, und einer an der Oberseite der ersten Schicht angeordneten zweiten Schicht aus einem textilen zweiten Material, wobei das erste Material entlang einer ersten Richtung eine höhere Elastizität als entlang einer von der ersten Richtung verschiedenen zweiten Richtung aufweist, wobei die erste Richtung und die zweite Richtung parallel zu der Oberseite der ersten Schicht verlaufen und wobei die erste Schicht und die zweite Schicht derart flächig miteinander verbunden sind, dass das Verbundmaterial entlang der ersten Richtung eine größere Elastizität als entlang der zweiten Richtung aufweist.

Mit einem derartigen Verbundmaterial werden die verschiedenen Eigenschaften der beiden miteinander verbundenen Schichten so kombiniert, dass das Verbundmaterial die jeweils gewünschten Eigenschaften der beiden Schichten aufweist. Die Struktur und Eigenschaften der Oberseite des Verbundmaterials werden dabei durch die Oberseite des zweiten Materials bestimmt, aus dem die zweite Schicht besteht. Die elastischen Eigenschaften des Verbundmaterials hingegen werden insbesondere von den elastischen Eigenschaften des ersten Materials bestimmt. So wird insbesondere die Elastizität des Verbundmaterials entlang der zweiten Richtung durch die relativ geringe Elastizität des ersten Materials in dieser Richtung begrenzt. Dazu ist es von Vorteil, wenn das zweite Material, das an der Oberseite der ersten Schicht angeordnet ist, sowohl entlang der ersten Richtung als auch entlang der zweiten Richtung eine Elastizität aufweist, die zumindest genauso groß ist wie die Elastizität des ersten Materials in der jeweiligen Richtung. So ist gewährleistet, dass die elastischen Eigenschaften des Verbundmaterials von den elastischen Eigenschaften des ersten Material bestimmt und begrenzt werden.

Vorteilhafterweise werden die erste Schicht und die zweite Schicht miteinander verklebt. Dies hat zur Folge, dass die einzelnen Maschen und Fäden der beiden Materialien auch beim Auf- und Zuschneiden des fertigen Verbundmaterials fest miteinander verbunden und somit stabil bleiben. Ein derartiges Verbundmaterial ist folglich industriell in vielfältiger Weise verwertbar, da es einfach und kostengünstig zuzuschneiden ist und dennoch langlebig und stabil bleibt. Insbesondere Veloursmaterialien neigen ansonsten sehr schnell zum Ausfransen an Schnittkanten, was durch das Verkleben der beiden Schichten miteinander stark reduziert oder sogar vollständig vermieden werden kann.

Vorteilhafterweise ist das erste Material entlang der zweiten Richtung unelastisch. Dabei bedeutet unelastisch insbesondere, dass sich das Material in der zweiten Richtung bei der normalen bestimmungsgemäßen Verwendung des Materials nicht oder zumindest nicht spürbar ausdehnt.

Das zweite Material ist ein textiles Material, wodurch insbesondere auch die haptischen Eigenschaften der Oberseite des Verbundmaterials bestimmt und angenehm gestaltet werden können.

Vorzugsweise ist an der Unterseite der ersten Schicht eine dritte Schicht aus einem textilen dritten Material angeordnet. Damit können auch die Eigenschaften der Unterseite des Verbundmaterials durch eine separate Schicht bestimmt und insbesondere individuell und auf die jeweiligen Bedürfnisse angepasst ausgebildet werden.

Als besonders vorteilhaft hat sich dabei herausgestellt, wenn das zweite Material und das dritte Material identisch und insbesondere ein Veloursmaterial sind, Veloursmaterialien können insbesondere vorteilhafterweise als Klettverschlusselement verwendet werden, da sie mit den dafür nötigen Schlaufen ausgebildet werden können. Mit einem derartigen Verbundmaterial sind folglich Klettverschlusselemente möglich, die sowohl auf der Oberseite als auch auf der Unterseite das zum Verwenden des Materials als Klettverschluss nötige Schlaufenmaterial aufweisen und dennoch entlang der ersten Richtung eine deutlich höhere Elastizität aufweisen als entlang der zweiten Richtung. Dabei verläuft die zweite Richtung vorteilhafterweise senkrecht zur ersten Richtung. Dadurch, dass vorteilhafterweise das zweite Material und das dritte Material identisch sind, muss bei der Verwendung des Verbundmaterials nicht darauf geachtet werden, an welcher Seite die Oberseite und die Unterseite angeordnet ist. Das Verbundmaterial ist in einer Richtung senkrecht zur Oberseite in diesem Fall symmetrisch aufgebaut, so dass es auch in einer um 180 Grad verdrehten Anordnung problemlos verwendet werden kann, in der die Oberseite unten und die Unterseite oben angeordnet ist.

Natürlich ist es auch möglich, dass das zweite Material und das dritte Material nicht identisch ausgebildet werden. So ist es für bestimmte Anwendungen unnötig, an beiden Seiten ein Velours- bzw. Klettverschlussmaterial vorzusehen. Oftmals liegen insbesondere bei der Verwendung von Orthesen die Gurte direkt an der Haut des Patienten an, so dass beispielsweise durch eine entsprechende Verwendung eines dritten Materials ein angenehmes Tragegefühl für den Patienten erreicht werden kann. Natürlich kann das dritte Material auch für völlig andere Anwendungsgebiete des hier beschriebenen Verbundmaterials ausgewählt und an die jeweils gewünschten Eigenschaften angepasst werden.

Auch in diesem Fall ist es jedoch von Vorteil, wenn das textile zweite Material und/oder das textile dritte Material entlang der ersten Richtung und entlang der zweiten Richtung die gleiche Elastizität aufweisen. Dies bedeutet insbesondere, dass beim Herstellen des Verbundmaterials nicht auf die richtige Ausrichtung des zweiten Materials und/oder des dritten Materials geachtet werden muss, so dass der Herstellungsprozess vereinfacht wird. Wichtig ist dabei jedoch, dass die Elastizität des zweiten Materials oder/oder des dritten Materials entlang der zweiten Richtung größer ist als die Elastizität des ersten Materials in dieser Richtung, damit die Elastizität des fertigen Verbundmaterials zumindest in dieser Richtung durch die geringe Elastizität des ersten Materials in dieser Richtung bestimmt wird.

Vorzugsweise ist das zweite Material und/oder das dritte Material eine Maschenware. Dabei fallen unter den Begriff Maschenware insbesondere Gestricke und Kettwirkware Dadurch wird ermöglicht, dass herkömmliche in beide Richtungen gleich elastische gestrickte Veloursmaterialien, die als Standard-Klettverschlusselement seit langem bekannt und auf dem Markt kostengünstig angeboten werden, verwendet werden können, so dass die Herstellung des Verbundmaterials kostengünstig, schnell und einfach möglich ist. Mit einem entsprechenden Verbundmaterial ist es folglich möglich, ein einseitig oder beidseitig als Klettverschlusselement zu verwendendes Material herzustellen, das in nur einer Richtung eine hohe Elastizität und in einer insbesondere senkrecht dazu verlaufenden zweiten Richtung eine sehr geringe Elastizität aufweist oder sogar als unelastisch bezeichnet werden kann.

Als Klebstoff zum Verbinden der unterschiedlichen Materialien miteinander hat sich ein Polymermaterial, insbesondere in thermoplastisches Polyurethan bewährt. Diese Materialien sind gut, einfach und kostengünstig beherrschbar und beispielsweise als Film- oder Folienmaterial seit langem bekannt. Eine derartige Schicht des Klebstoffs kann im gut handhabbaren Zustand zwischen die einzelnen Materialschichten gelegt und dann beispielsweise durch Aufheizen aufgeschmolzen werden, so dass die Klebwirkung eintritt.

Ein erfindungsgemäßes Verfahren zum Herstellen eines hier beschriebenen Verbundmaterials zeichnet sich durch folgende Schritte aus:
a) Aufbringen eines Klebstoffs auf die Oberseite der ersten Schicht oder eine Unterseite der zweiten Schicht,
b) Verpressen der ersten Schicht und der zweiten Schicht zu dem Verbundmaterial, so dass die zweite Schicht mit ihrer Unterseite an der Oberseite der ersten Schicht anliegt.

Vorzugsweise umfasst das Verfahren zusätzlich die folgenden Schritte:
c) Aufbringen des Klebstoffs auf die Unterseite des Verbundmaterials aus erster Schicht und zweiter Schicht oder eine Oberseite der dritten Schicht
d) Verpressen der dritten Schicht und des Verbundmaterials aus erster Schicht und zweiter Schicht zu dem Verbundmaterial, so dass die dritte Schicht mit ihrer Oberseite an der Unterseite des Verbundmaterials aus erster Schicht und zweiter Schicht anliegt.

Vorteilhafterweise wird nach dem Verpressen das Verbundmaterial in einer separaten Kühleinrichtung abgekühlt, bevor es beispielsweise auf einer großen Rolle aufgewickelt und gelagert oder weiteren Verarbeitungsschritten, beispielsweise einer Zuschneideeinrichtung zugeführt wird. Ein derartiges Verbundmaterial, das nach einem der hier beschriebenen Verfahren hergestellt wurde, kann nachträglich auf die gewünschten Maße zugeschnitten werden. Dies gilt insbesondere auch für die zweite Richtung, in der das Verbundmaterial eine geringe oder gar keine Elastizität aufweist. Das Material kann folglich großflächig hergestellt werden, wodurch insbesondere die Herstellungskosten gesenkt werden und gleichzeitig die benötigte Lagerhaltung für unterschiedliche Abmessungen des Materials verringert werden.

Der Klebstoff kann beispielsweise ein Polyurethanklebstoff sein, Polyurethanklebstoffe sind in unterschiedlichsten Formen aus dem Stand der Technik bekannt. So kann der Klebstoff beispielsweise in Form eines Pulvers zwischen den beiden miteinander zu verbindenden Schichten angeordnet werden. Alternativ oder zusätzlich dazu kann auch eine dünne Folie oder ein Film aus einem thermoplastischen Polyurethan verwendet werden, die zwischen den beiden zu verbindenden Schichten platziert wird. Für den Fall, dass der als Klebstoff zu verwendende Werkstoff in fester Form vorliegt und in dieser Form keine klebenden Eigenschaften aufweist, wird der Klebstoff durch Aufheizen aufgeschmolzen. Im dann flüssigen Zustand kommt er mit den beiden zu verbindenden Materialschichten in Kontakt. Dieser Kontakt bleibt auch nach dem Abkühlen des aufgeschmolzenen Klebstoffs, bei dem dieser erstarrt vorhanden, so dass es hier zu einer Verbindung der beiden miteinander zu verbindenden Schichten kommt.

Natürlich sind auch andere Arten von Klebstoffen denkbar. So ist es beispielsweise möglich, flüssige Klebstoffe beispielsweise durch eine Auftragswalze auf eine der beiden miteinander zu verbindenden Schichten aufzubringen und auf dieser die zweite Schicht anzuordnen. Nach dem Ausgasen von Lösungsmitteln kommt es hier zur klebenden Verbindung. Wichtig ist jedoch lediglich, dass die Verbindung zwischen den beiden Schichten stabil und sicher auch unter relativ starker mechanischer Zug- und Scherbelastung ist. Jeder Klebstoff, der dies gewährleistet, kann bei dem hier beschriebenen Verfahren verwendet werden.

Um während der Herstellung des Verbundmaterials ein zu starkes Abkühlen des aufgeheizten Klebstoffs zu verhindern, kann beispielsweise auch wenigstens eine Druckrolle, die zum Verpressen der Schichten miteinander verwendet wird, beheizt sein. In der Regel wird natürlich nicht nur der Klebstoff aufgeheizt. Es hat sich als vorteilhaft herausgestellt, wenn auch die aufeinander aufzubringenden Schichten aus dem ersten Material und dem zweiten Material bzw. dem dritten Material aufgeheizt werden.

Mit Hilfe einer Zeichnung wird nachfolgend ein Ausführungsbeispiel der vorliegenden Erfindung näher erläutert. Es zeigt:
- Figur 1 -: die schematische Darstellung eines Verbundmaterials gemäß einem ersten Ausführungsbeispiel der vorliegenden Erfindung,
- Figur 2 -: die schematische Darstellung einer Vorrichtung zum Herstellen eines Verbundmaterials gemäß einem weiteren Ausführungsbeispiel der vorliegenden Erfindung und
- Figur 3 -: die schematische Darstellung einer weiteren Vorrichtung zum Herstellen eines Verbundmaterials gemäß einem Ausführungsbeispiel der vorliegenden Erfindung und
- Figur 4: die schematische Darstellung einer weiteren Vorrichtung zum Herstellen eines Verbundmaterials gemäß eines Ausführungsbeispiels der vorliegenden Erfindung.

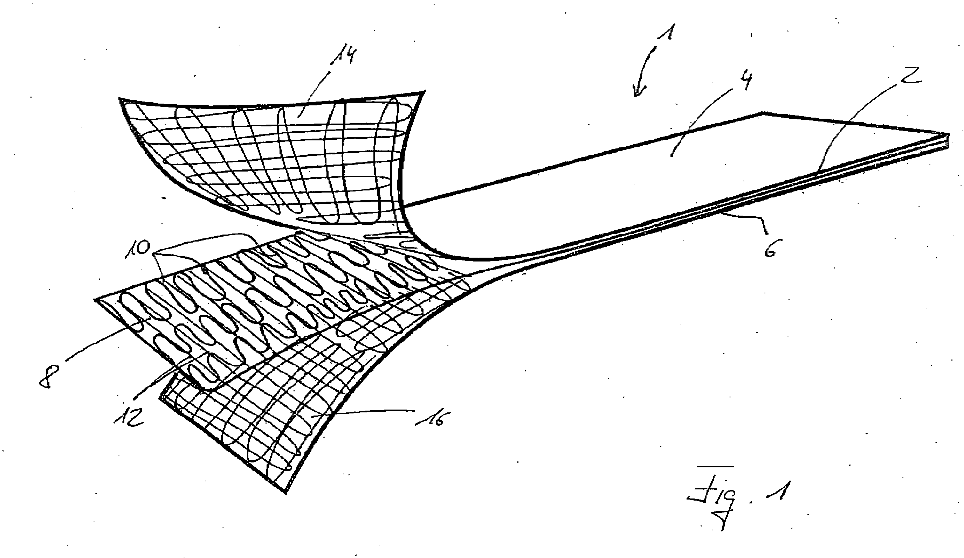

Figur 1 zeigt die schematische Darstellung eines Verbundmaterials 1, das im gezeigten Ausführungsbeispiel aus drei Schichten besteht. In der Mitte befindet sich die erste Schicht 2, die im in Figur 1 gezeigten Ausführungsbeispiel oben von einer zweiten Schicht 4 und unten von einer dritten Schicht 6 abgedeckt wird. Im linken Bereich der Figur 1 sind die drei Schichten 2, 4, 6 voneinander gelöst dargestellt. Durch unterschiedliche Schraffuren werden die unterschiedlichen Elastizitäten der verwendeten Materialien dargestellt. Die erste Schicht 2 besteht aus einem ersten Material 8, das beispielsweise ein Film aus einem thermoplastischen Polyurethan sein kann. Die Längsausdehnung des in Figur 1 gezeigten Verbundmaterials 1 ist dabei die erste Richtung. Durch die in diese Richtung gewellt verlaufenden Linien 10 im ersten Material 8 wird angedeutet, dass das erste Material 8 in dieser Richtung elastisch ist. Durch die senkrecht dazu gerade verlaufenden Linien 12 wird angedeutet, dass das erste Material 8 in einer senkrecht zur Längsrichtung verlaufenden zweiten Richtung, die der Richtung der Linien 12 entspricht, unelastisch ist.

Die zweite Schicht 4 besteht aus einem zweiten Material 14, das wie ein drittes Material 16, aus dem die dritte Schicht 6 besteht, sowohl entlang der ersten Richtung, die der Längsrichtung des Verbundmaterials 1 entspricht, als auch entlang der zweiten Richtung, die der Querrichtung des Verbundmaterials 1 entspricht, elastisch ausgebildet ist. Man erkennt dies in Figur 1 an den in beide Richtungen gewellt verlaufenden Linien.

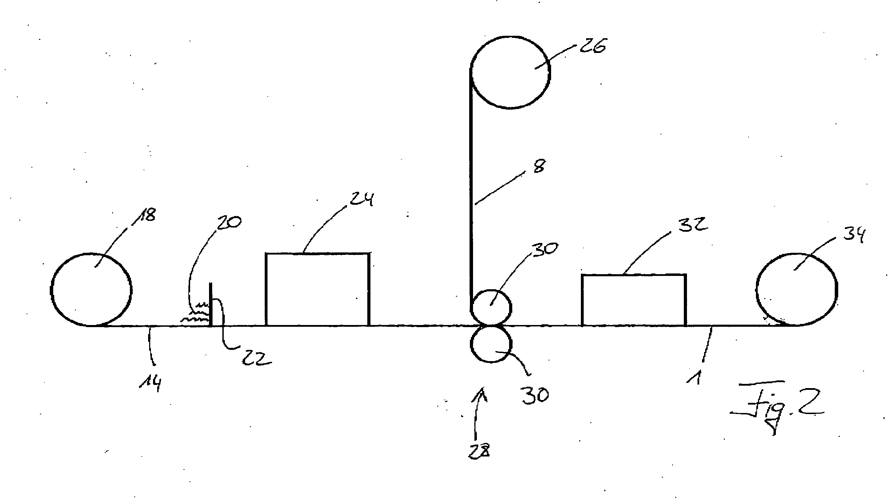

Figur 2 zeigt die schematische Darstellung einer ersten Produktionsanlage, in der ein Verfahren gemäß einem ersten Ausführungsbeispiel der vorliegenden Erfindung ausgeführt werden kann. Auf einer ersten Rolle 18 befindet sich im gezeigten Ausführungsbeispiel das zweite Material 14, das abgerollt und im in Figur 2 gezeigten Ausführungsbeispiel von links nach rechts befördert wird. Rechts von der ersten Rolle 18 wird ein Klebstoff 20 auf eine Seite des zweiten Materials 14 aufgebracht. Der Klebstoff 20 wird von einem Rakel 22 zurückgehalten und gleichmäßig auf einer Oberfläche des zweiten Materials 14 verteilt. Das so mit dem Klebstoff 20 beschichtete zweite Material 14 durchläuft eine Heizvorrichtung 24, in der der Klebstoff 20 und das zweite Material 14 erwärmt und der Klebstoff 20 so thermisch aktiviert wird. Von einer zweiten Rolle 26 wird nun das erste Material 8 abgewickelt und in einer Verpressvorrichtung 28, die im in Figur 2 gezeigten Ausführungsbeispiel in Form von zwei Druckwalzen 30 dargestellt ist, an der mit dem Klebstoff 20 versehenen Seite des zweiten Materials 14 befestigt. Anschließend durchläuft der Schichtaufbau eine Kühlvorrichtung 32, in der das Verbundmaterial 1 abgekühlt wird. Anschließend wird es auf einer dritten Rolle 34 aufgewickelt.

In der Heizvorrichtung 24 wird der Klebstoff 20 und das zweite Material 14 aufgeheizt. Der Klebstoff 20, der beispielsweise ein Polyurethanklebstoff sein kann, wird auf diese Weise aufgeschmolzen. Um das erste Material 8, das von der zweiten Roll 26 abgewickelt wird, vorzuwärmen und zudem ein zu starkes Auskühlen des thermisch aktivierten Klebstoffs 20 zu verhindern, können auch die Druckwalzen 30 vorgeheizt sein.

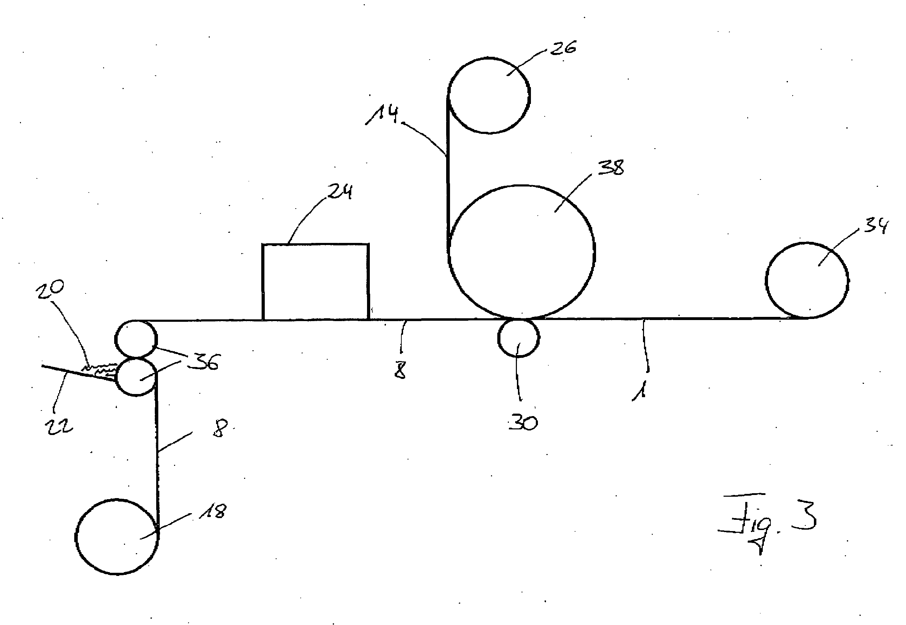

Figur 3 zeigt eine andere Ausführungsform einer Vorrichtung zum Durchführen eines Verfahrens gemäß einem Ausführungsbeispiel der vorliegenden Erfindung.

Anders als im in Figur 2 gezeigten Ausführungsbeispiel wird hier von der ersten Rolle 18 das erste Material 8 abgewickelt und einer Beleimungseinrichtung zugeführt. Diese ist im in Figur 3 gezeigten Ausführungsbeispiel durch zwei Auftragswalzen 36 dargestellt von dem die untere mit Klebstoff 20 versehen ist, der über das Rakel 22 gleichmäßig auf der Auftragswalze 36 verteilt wird. Das so mit Klebstoff 20 versehene erste Material 8 durchläuft die Heizvorrichtung 24, in der der aufgebrachte Klebstoff 20 aufgeschmolzen wird.

Von der zweiten Rolle 26 wird im in Figur 3 gezeigten Ausführungsbeispiel das zweite Material 14 abgewickelt, das zunächst mit einer großen Druckwalze 38 in Kontakt kommt, die beispielsweise vorgeheizt sein kann, um das zweite Material 14 vorzuwärmen und so ein zu starkes Abkühlen des Klebstoffs 20, der sich auf dem ersten Material 8 befindet, zu verhindern. Das zweite Material 14 wird während des teilweisen Umlaufs um die große Druckwalze 38 zwischen der großen Druckwalze 38 und der Druckwalze 30 an das mit Klebstoff 20 versehene erste Material 8 gedrückt und so mit diesem verpresst, dass dabei das Verbundmaterial 1 entsteht. Dieses wird im in Figur 3 gezeigten Ausführungsbeispiel ohne das Durchlaufen einer separaten Kühlvorrichtung auf der dritten Rolle 34 aufgerollt und kann so beispielsweise einer Zuschneidevorrichtung zugeführt werden.

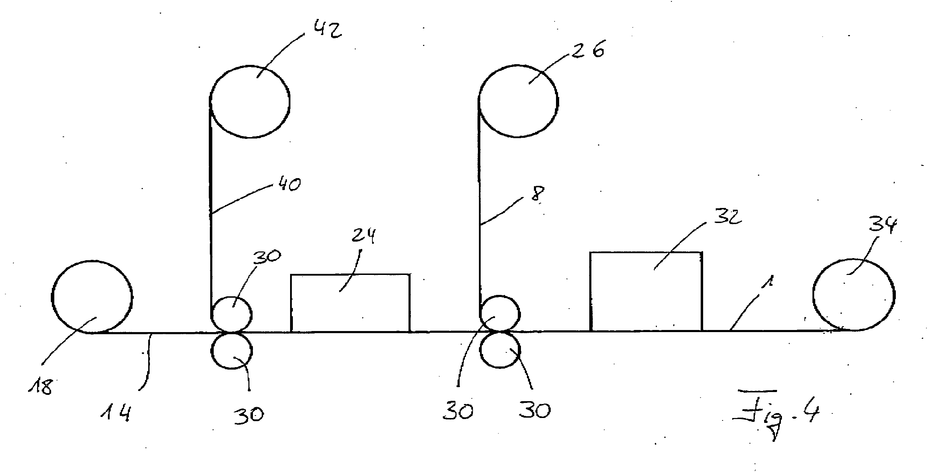

Figur 4 zeigt eine weitere Ausgestaltung einer Vorrichtung, mit der ein Verbundmaterial 1 gemäß einem Ausführungsbeispiel der vorliegenden Erfindung hergestellt werden kann. Sie entspricht im Wesentlichen der in Figur 2 dargestellten Vorrichtung. Auch hier befindet sich auf der ersten Rolle 18 das zweite Material 14, das abgerollt wird. Anders als im in Figur 2 gezeigten Ausführungsbeispiel wird jedoch der Klebstoff 20 nicht in flüssiger oder pulverförmiger Form aufgetragen, sondern wird in Form einer Polyurethanfolie 40 von einer vierten Rolle 42 abgewickelt. Zwischen Druckwalzen 30 wird die Polyurethanfolie 40 am zweiten Material 14 angelegt und beide Schichten gemeinsam durchlaufen die Heizvorrichtung 24. In dieser Heizvorrichtung 24 werden Temperaturen erreicht, die ausreichen, die Polyurethanfolie 40 aufzuschmelzen, so dass sich auf dem zweiten Material 14 ein flüssiger Film aus thermoplastischem Polyurethan bildet. Auf diesen wird nun das erste Material 8, das von der zweiten Rolle 26 abgerollt wird, über weitere Druckwalzen 30 angeordnet. Diese sorgen gleichzeitig für ein Andrücken der einzelnen Schichten aufeinander, so dass es zu einer Verbindung mit dem flüssigen Polyurethan der Polyurethanfolie 40 kommt. In der Kühlvorrichtung 32 wird der Schichtaufbau abgekühlt, so dass das Polyurethan der Polyurethanfolie 40 erstarrt und es so zu einer Verbindung der einzelnen Schichten miteinander kommt. Anschließend wird der Verbundwerkstoff 1 auf der dritten Rolle 24 aufgerollt.

Die Verwendung derartiger Klebstoffe, wie beispielsweise thermoplastischem Polyurethan, hat den Vorteil, dass der Klebstoff selbst ebenfalls dehnbar ist und sich somit der Elastizität des Verbundwerkstoffes 1 in einer Richtung anpasst, ohne dass es hier zu einem Reißen einer sonstigen Beschädigung der Klebstoffschicht kommen könnte, die zu einer Beschädigung oder der Funktionsunfähigkeit des Verbundwerkstoffes 1 führen könnte.

### Bezugszeichenliste

- 1: Verbundmaterial
- 2: Erste Schicht
- 4: Zweite Schicht
- 6: Dritte Schicht
- 8: Erstes Material
- 10: Linien
- 12: Linien
- 14: Zweites Material
- 16: Drittes Material
- 18: Erste Rolle
- 20: Klebstoff
- 22: Rakel
- 24: Heizvorrichtung
- 26: Zweite Rolle
- 28: Verpressvorrichtung
- 30: Druckwalze
- 32: Kühlvorrichtung
- 34: Dritte Rolle
- 36: Auftragswalze
- 38: Große Druckwalze
- 40: Polyurethanfolie
- 42: Vierte Rolle

## Patentansprüche

1. Verbundmaterial (1) mit
einer ersten Schicht (2) aus einem ersten Material (8), die
- eine Oberseite und eine der Oberseite gegenüberliegende Unterseite aufweist, und
einer an der Oberseite der ersten Schicht (2) angeordneten zweiten Schicht (4) aus einem textilen zweiten Material (14),
wobei das erste Material (8) entlang einer ersten Richtung eine höhere Elastizität als entlang einer von der ersten Richtung verschiedenen zweiten Richtung aufweist,
wobei die erste Richtung und die zweite Richtung parallel zu der Oberseite des ersten Schicht (2) verlaufen und
wobei die erste Schicht (2) und die zweite Schicht (4) derart flächig miteinander verbunden sind, dass das Verbundmaterial (1) entlang der ersten Richtung eine größere Elastizität als entlang der zweiten Richtung aufweist.

2. Verbundmaterial (1) nach Anspruch 1, **dadurch gekennzeichnet, dass** das erste Material (8) entlang der zweiten Richtung unelastisch ist.

3. Verbundmaterial (1) nach Anspruch 1 oder 2, **dadurch gekennzeichnet, dass** an der Unterseite der ersten Schicht (2) eine dritte Schicht (6) aus einem textilen dritten Material (16) angeordnet ist.

4. Verbundmaterial (1) nach Anspruch 1, 2 oder 3, **dadurch gekennzeichnet, dass** das zweite Material (14) und das dritte Material (16) identisch und insbesondere ein Velourmaterial sind.

5. Verbundmaterial (1) nach einem der vorstehenden Ansprüche, **dadurch gekennzeichnet, dass** das zweite Material (14) und/oder das dritte Material (16) eine Maschenware ist.

6. Verbundmaterial (1) nach einem der vorstehenden Ansprüche, **dadurch gekennzeichnet, dass** das textile zweite Material (14) und/oder das textile dritte Material (16) entlang der ersten Richtung und entlang der zweiten Richtung die gleiche Elastizität aufweisen.

7. Verfahren zum Herstellen eines Verbundmaterials (1) nach einem der vorstehenden Ansprüche, **gekennzeichnet durch** die folgenden Schritte:
a. Aufbringen eines Klebstoffs (20) auf die Oberseite der ersten Schicht (2) oder eine Unterseite der zweiten Schicht (4),
b. Verpressen der ersten Schicht (2) und der zweiten Schicht (4) zu dem Verbundmaterial (1), so dass die zweite Schicht (4) mit ihrer Unterseite an der Oberseite der ersten Schicht (2) anliegt.

8. Verfahren nach Anspruch 7, **gekennzeichnet durch** die zusätzlichen Schritte:
c) Aufbringen des Klebstoffs (20) auf die Unterseite des Verbundmaterials (1) aus erster Schicht (2) und zweiter Schicht (4) oder eine Oberseite der dritten Schicht (6),
d) Verpressen der dritten Schicht (6) und des Verbundmaterials (1) aus erster Schicht (2) und zweiter Schicht (4) zu dem Verbundmaterial (1), so dass die dritte Schicht (6) mit ihrer Oberseite an der Unterseite des Verbundmaterials aus erster Schicht und zweiter Schicht (4) anliegt.

9. Verfahren nach Anspruch 7 oder 8, **dadurch gekennzeichnet, dass** nach dem Verpressen das Verbundmaterial (1) in einer separaten Kühlvorrichtung (32) abgekühlt wird.

10. Verfahren nach Anspruch 7, 8 oder 9, **dadurch gekennzeichnet, dass** der Klebstoff (20) ein Polyurethanklebstoff ist.
